# EUROPEAN PATENT APPLICATION

(11) **EP 2 851 271 A1**
(43) Date of publication of application: **25.03.2015**
(21) Application number: 12876789.4
(22) Date of filing: 16.05.2012
(51) Int. Cl.: B62D 25/00

(54) **VEHICLE STRUCTURE BODY**

(71) Applicant: Toray Industries, Inc., Tokyo 103-8666 (JP)
(72) Inventor: HASHIMOTO Kosaku, Nagoya-shi Aichi 455-8502 (JP); KIMOTO Yukitane, Nagoya-shi Aichi 455-8502 (JP); KORODA Yoshito, Nagoya-shi Aichi 455-8502 (JP)
(74) Representative: Hoefer & Partner
(86) International application number: PCT/JP2012/062459
(87) International publication number: WO 2013/171852

(57) **Abstract**

A vehicle structure body forms at least a cabin outline of a vehicle and includes a floor, side panels, and a roof, and is characterized in that frames extending in a direction at a crossing angle with respect to the front-rear direction of the vehicle so as to form loops are provided at three locations of the structure body at a front portion, a rear portion, and a center portion between the front portion and the rear portion, respectively. A structure body having high strength and stiffness can be realized such that deformation can be appropriately suppressed even if receiving a large lateral load, thereby facilitating formation of the vehicle structure body using FRP and achieving a weight reduction through the use of FRP.

## Description

### Technical Field of the Invention

The present invention relates to a vehicle structure body forming at least a cabin outline of a vehicle.

### Background Art of the Invention

As a vehicle structure body forming at least a cabin outline of a vehicle, for example, a technology is known wherein a frame structure is formed by providing a frame extending in a vehicle width direction so as to surround a cabin at a central portion in a front-rear direction of the cabin (hereinafter, the "frame extending in a vehicle width direction so as to surround a cabin" is also referred to as a cross frame.) to a base frame provided at a lower portion of the cabin, and panel components such as a floor, side panels and a roof are connected to this frame structure to form a structural body for forming a cabin portion. The vehicle frame structure formed by using such a cross frame is also called as a space frame, and usually, it is formed as a structure connected or linked with metal frame components (for example, Patent document 1).

In a vehicle which does not employ such a space frame, although usually a side panel is connected to a B pillar extending upwardly at a central portion in the front-rear direction of a cabin or formed integrally with the B pillar, it is frequently difficult to sufficiently bear against a large load from a lateral direction, and therefore, it is difficult to realize a high performance resistant against a lateral collision. From this point of view, in a vehicle employing a space frame having a cross frame at a central portion (a center portion) in the front-rear direction of a cabin as described above, as compared with a structure comprising a side panel and a B pillar, it is possible to support a greater load due to a lateral collision. In a conventional vehicle employing a space frame, however, because usually a cross frame is provided only at a center portion and loads from a lateral direction applied to a front portion side and a rear portion side of a side panel are supported by an A pillar (a pillar extending upwardly at a front portion in a front-rear direction of a cabin) and a C pillar (a pillar extending upwardly at a rear portion in the front-rear direction of the cabin), it is difficult to sufficiently bear against a large load by these pillar supporting structural portions. Therefore, in case where a position applied with a load due to a lateral collision shifts from the center portion to a front or rear side, it is difficult to realize an excellent performance resistant against a lateral collision.

On the other hand, separately from the structure employing a space frame as described above, recently, in order to promote a weight reduction of a vehicle, in particular, a weight reduction of a vehicle structure body forming at least a cabin outline of a vehicle, technologies are proposed in which a panel-like component (a plane-shaped component) in the structure body is formed from an FRP (Fiber Reinforced Plastic) (for example, Patent document 1) or a frame component in the structure body is formed as a component formed into a special shape such as a ring-like or an arc-like shape and the frame component is formed from an FRP (for example, Patent documents 2 and 3)

In Patent document 1, however, although only making a plane-shaped component from an FRP is shown, if a side panel were made from an FRP, in case where a part for attaching a hinge or a lock of a door, in which load concentration is liable to occur, is provided to the FRP side panel, the panel structure becomes complicated, and further, the design of the structure becomes difficult in consideration of strength required thereto.

Further, in Patent documents 2 and 3, only a structure disposing a specially shaped frame component at a special formation is disclosed, and it is not considered to form a usual cabinet having a general shape or with respect to connection between a frame structure and a panel-like component, etc. Therefore, such a structure as disclosed in Patent documents 2 and 3 cannot be applied to a vehicle with a general formation.

### Prior art documents

### Patent documents

Patent document 1: JP-A-2011-516329
Patent document 2: JP-A-2011-245912
Patent document 3: JP-A-2010-023706

### Summary of the Invention

### Problems to be solved by the Invention

Accordingly, in consideration of the above-described present circumstances, an object of the present invention is to provide a vehicle structure body which can give a sufficiently high performance in load resistance to a frame structure part of a vehicle structure body forming at least a cabin outline, thereby easily making at least a main structure part of the structure body from an FRP, and which can promote a weight reduction of the whole of the structure body.

Further, another object of the present invention is to provide a vehicle structure body which can form a part for attaching a hinge or a lock of a door, in which load concentration is liable to occur, in the structure body easily and efficiently while ensuring high strength and stiffness.

A further object of the present invention is to provide a vehicle structure body which can desirably realize a structure having a high performance in deformation resistance against a large load applied at the time of a lateral collision and the like, easily without damaging a requirement for setting a center of gravity of a vehicle body lower.

### Means for solving the Problems

To achieve the above objects, a vehicle structure body according to the present invention forms at least a cabin outline of a vehicle and includes a floor, side panels, and a roof, and is characterized in that frames extending in a direction at a crossing angle with respect to a front-rear direction of the vehicle (for example, in a direction perpendicular to the front-rear direction of the vehicle) so as to form loops are provided at three locations of the structure body at a front portion, a rear portion, and a center portion between the front portion and the rear portion, respectively.

In such a vehicle structure body according to the present invention, as compared with the conventional space frame provided with a cross frame only at a center portion, since the frames extending in a direction at a crossing angle with respect to a front-rear direction of the vehicle (that is, frame similar to the conventional cross frame) are provided at three locations of the structure body at a front portion, a rear portion, and a center portion, respectively, a load from a lateral direction, which has been received by the conventional cross frame and an A pillar at the front side or a B pillar at the rear side, can be received also by frames provided at the front portion and the rear portion and extending so as to form loops, in addition to the frame at the center portion. Because these respective frames extend so as to form loops, they are much higher in strength and stiffness than a pillar simply extending upwardly. As a result, a large load from a lateral direction can be received even at a portion other than the center portion, a sufficiently high performance resistant against a lateral collision can be exhibited over the entire plane part of a side panel supported by these frames. Further, since panel components of a floor, side panels and a roof are provided to the frame structure having the frames provided at these three locations, the frame structure and the respective panel components are supported by each other and suppressed in deformation by each other, and high strength and stiffness can be exhibited also as the whole of the vehicle structure body. Moreover, since the frames provided at the above-described three locations may have simple loop structures, they can be easily formed in structures capable of exhibiting high strength and stiffness, and in accordance to requirements, it becomes possible to easily make them from an FRP while maintaining these high strength and stiffness. Then, by giving high strength and stiffness to the respective frames, it becomes possible to dispose a part for attaching a hinge or a lock of a door, in which load concentration is liable to occur, in a vertical frame part of each frame, it becomes unnecessary to dispose a part for attaching a hinge or a lock of a door in a side panel, and therefore, in addition to facilitation of making the respective frames from an FRP, a structure design when making panel components such as side panels from an FRP can also be facilitated. As a result, at least a main structural portion of the vehicle structure body, desirably, the whole thereof, can be easily made from an FRP, and a great weight reduction of the vehicle structure body can be realized.

As described above, in the vehicle structure body according to the present invention, a structure can be employed wherein a vertical frame part extending in a vertical direction in each of the respective frames provided at the above-described three locations forms an attachment base means for a hinge or a lock of a side door. In the vertical frame part of the frame at the center portion, both of an attachment base means for a lock of a side door at the front side and an attachment base means for a hinge of a side door at the rear side can be formed.

Further, a structure can also be employed wherein a vertical frame part extending in a vertical direction in each frame forms a reinforcement means for the above-described side panels. Further, a structure can also be employed wherein a lateral frame part extending in a vehicle width direction at a lower part of each frame forms a reinforcement means for the above-described floor. Furthermore, a structure can also be employed wherein a lateral frame part extending in a vehicle width direction at an upper part of each frame forms a reinforcement means for the above-described roof.

Further, in the present invention, a structure can be employed wherein a left upper end in a vehicle width direction of a frame provided at the above-described center portion is connected to a right upper end in a vehicle width direction of a frame provided at the above-described front portion or rear portion, or at each of the above-described front portion and rear portion, and a right upper end in a vehicle width direction of the frame provided at the center portion is connected to a left upper end in a vehicle width direction of a frame provided at the front portion or the rear portion, or at each of the front portion and the rear portion, through a reinforcement means exhibiting a strength in a tensile direction, respectively. In such a structure, when a load is applied to the frame provided at the center portion from a lateral direction, the load is received by the frame itself provided at the center portion and at the same time it can be received dispersedly also by the frame or frames provided at the front portion or/and the rear portion to which a force is transmitted through the reinforcement means connected as described above, and a larger load due to a lateral collision can be received. Further, by the connection structure due to the reinforcement means, the strength and stiffness as the whole of the frame structure are also enhanced, it becomes possible to realize a structure which causes less deformation against the load and in which a possibility of breakage is removed.

Further, in the vehicle structure body according to the present invention, for weight reduction, it is preferred that the respective parts are formed from a fiber reinforced resin (FRP) as much as possible. For example, it is preferred that at least one of frames provided at the above-described front portion, rear portion and center portion is formed from a fiber reinforced resin, and it is more preferred that all these frames are formed from a fiber reinforced resin.

In this case, as reinforcing fibers of the fiber reinforced resin, it is preferred that carbon fibers, which can easily realize high strength and stiffness and which are easy to design those properties, are included. Of course, it is also possible to use other reinforcing fibers such as glass fibers and aramide fibers and to use two or more kinds of reinforcing fibers together. Further, as a matrix resin of the fiber reinforced resin, both of a thermoplastic resin and a thermosetting resin can be used, and in consideration of mass production and easiness of molding, a thermoplastic resin is more preferred.

Further, in the present invention, it is also possible to employ a structure wherein at least one of frames provided at the above-described front portion, rear portion and center portion is formed from a metal. If the frame is formed from a metal, although it becomes disadvantageous from the viewpoint of weight as compared with the case formed from a fiber reinforced resin, because there is a possibility where it is more desirable depending upon the part or the vehicle kind of the vehicle structure body that at least any of frames is formed from a metal, in such a case a metal frame may be used.

It is similar with respect to the panel components. Namely, it is preferred that at least one of the above-described floor, side panels and roof is formed from a fiber reinforced resin, and from the viewpoint of weight reduction, it is more preferred that all of these components are formed from a fiber reinforced resin.

Further, in the present invention, it is preferred that a lateral frame part extending in a vehicle width direction at an upper part of each frame is formed from a material having a specific gravity lower than those of the other frame parts. Further, it is preferred that the above-described reinforcement means is formed from a material having a specific gravity lower than those of the other components. In such a structure, since it becomes possible to make the weight of the upper-side part of the vehicle structure body relatively lower than that of the lower-side part, in case where a requirement for setting a center of gravity of a vehicle body lower is present, it becomes possible to satisfy the requirement. In other words, without damaging a requirement for setting a center of gravity of a vehicle body lower, it becomes possible to realize a vehicle structure body having a high performance in deformation resistance against a large load due to a lateral collision and the like, as described above.

### Effect according to the Invention

Thus, in the vehicle structure body according to the present invention, by providing frames extending so as to form loops at three locations of the structure body at a front portion, a rear portion and a center portion, respectively, a structure body can be realized which has high strength and stiffness that can appropriately suppress deformation even if it receives a large load from a lateral direction, whereby forming the vehicle structure body from an FRP and weight reduction through the forming from the FRP become possible.

Further, it becomes possible to form an attachment part for a hinge or a lock of a door on the frames provided at three locations as described above, and a structure on a panel component is made unnecessary, and as a result, it can contribute to promote making the structure body from an FRP.

Furthermore, by devising the structure of a lateral frame part, a reinforcement means, etc., without damaging setting a center of gravity of a vehicle body lower, as a whole a structure body with high strength and stiffness can be realized.

### Brief explanation of the drawings

[Fig. 1] Fig. 1 is an exploded perspective view of a vehicle structure body according to an embodiment of the present invention.
[Fig. 2] Fig. 2 is an appearance perspective view of the vehicle structure body shown in Fig. 1.
[Fig. 3] Fig. 3 is a perspective view showing an interior structure of the vehicle structure body shown in Fig. 1.
[Fig. 4] Fig. 4 is a perspective view of a frame structure part of a vehicle structure body according to another embodiment of the present invention.

### Embodiments for carrying out the Invention

Hereinafter, embodiments of the present invention will be explained referring to figures.

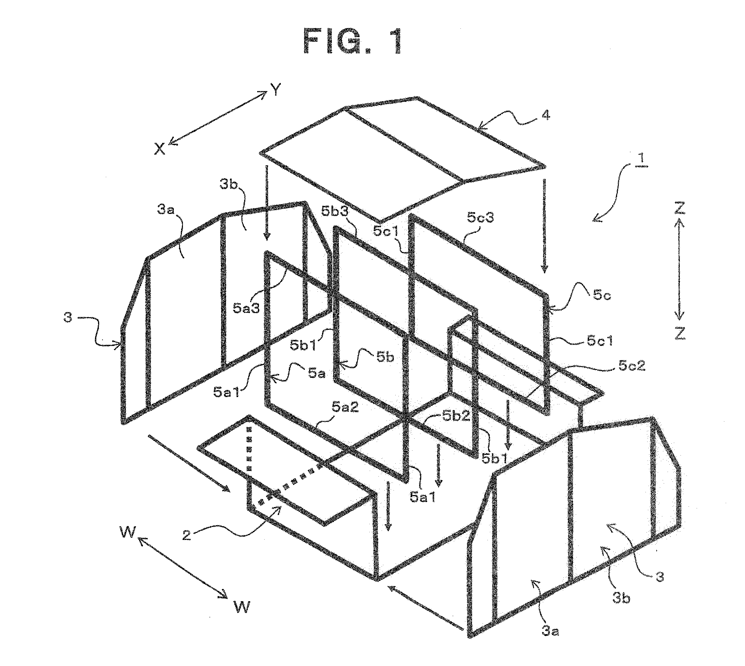

Figs. 1 to 3 show a vehicle structure body according to an embodiment of the present invention. A vehicle structure body 1 shown in the figures is formed as a vehicle structure body which forms at least a cabin outline of a vehicle and includes panel components comprising a floor 2 provided at a lower side, side panels 3 provided at both sides and a roof 4 provided at an upper side. In this vehicle structure body 1, frames extending in a direction at a crossing angle with respect to a front-rear direction of the vehicle (X-Y direction in Fig. 1), in the embodiment shown in the figures, in a direction perpendicular to the vehicle front-rear direction X-Y, so as to form loops (that is, extending in a square shape so as to surround the cabin part) are provided at three locations of the structure body at a front portion (a portion at an X-side part in Fig. 1), a rear portion (a portion at an Y-side part in Fig. 1), and a center portion between the front portion and the rear portion, respectively. Hereinafter, the frame provided at the front portion of the structure body is also referred to as a front cross frame 5a, the frame provided at the center portion of the structure body is also referred to as a center cross frame 5b, and the frame provided at the rear portion of the structure body is also referred to as a rear cross frame 5c. Where, although respective frames 5a, 5b and 5c are depicted briefly so as to extend in square shapes in the embodiment shown in the figures, for example, it is also possible to form the upper-side part of front cross frame 5a so as to curve toward the rear side and to form the upper-side part of rear cross frame 5c so as to curve toward the front side, and further, it is also possible to form at least any of front cross frame 5a, center cross frame 5b and rear cross frame 5c (in particular, the upper-side part thereof) so as to curve toward the inside (toward the cabin).

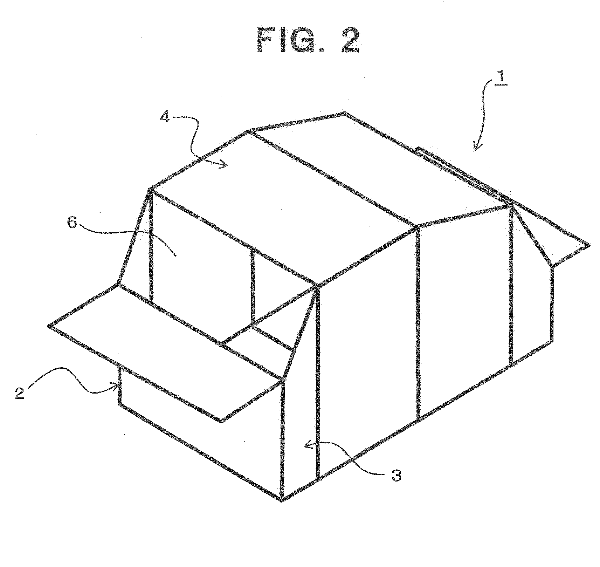

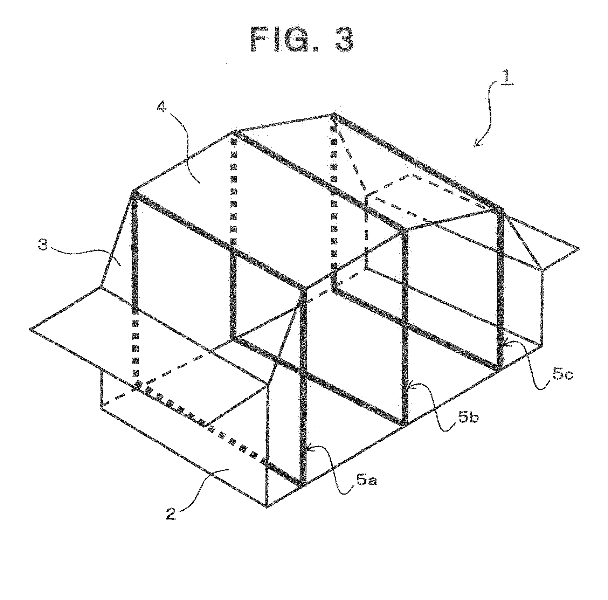

As shown in Fig. 2, by attaching floor 2, side panels 3 and roof 4 to frames 5a, 5b and 5c provided at three locations as described above by bonding and the like, the inside surrounded by these panel components 2, 3 and 4 is formed as a cabin 6. Namely, the interior structure of vehicle structure body 1 is formed as shown in Fig. 3.

In this embodiment, all of frames 5a, 5b and 5c are formed from a carbon fiber reinforced resin, and to these frames 5a, 5b and 5c, respective panel components 2, 3 and 4 are bonded by, for example, adhesion. In this case, in order to increase the frame stiffness, it is preferred that the respective frames 5a, 5b and 5c contain reinforcing fibers extending in the circumferential directions of the frames, particularly, carbon fibers. Further, in this embodiment, all of the respective panel components of floor 2, side panels 3 and roof 4 are also formed from a fiber reinforced resin, in particular, from a carbon fiber reinforced resin, and as compared with ones formed from a metal, the whole of vehicle structure body 1 is greatly reduced in weight.

The vertical frame part of each of the respective frames 5a, 5b and 5c, extending in a vertical direction (in a direction Z-Z in Fig. 1), forms an attachment base means for a hinge or a lock of a side door (not shown) attached to a space forming part (3a, 3b) of side panel 3. For example, a vertical frame part 5a1 of front cross frame 5a forms an attachment base means for a hinge of a side door at the front side, a vertical frame part 5b1 of center cross frame 5b forms an attachment base means for a lock of a side door at the front side and an attachment base means for a hinge of a side door at the rear side, and a vertical frame part 5c1 of rear cross frame 5c forms an attachment base means for a lock of a side door at the rear side,

Further, the vertical frame parts 5a1, 5b1 and 5c1 extending in the vertical direction in the respective frames 5a, 5b and 5c also form reinforcement means for the above described side panels 3. Further, lateral frame parts 5a2, 5b2 and 5c2 extending a vehicle width direction (in a direction W-W in Fig. 1) at the lower parts of the respective frames 5a, 5b and 5c form a reinforcement means for the above described floor 2. Furthermore, lateral frame parts 5a3, 5b3 and 5c3 extending the vehicle width direction W-W at the upper parts of the respective frames 5a, 5b and 5c form a reinforcement means for the above described roof 4.

In vehicle structure body 1 thus constructed, since frames 5a, 5b and 5c extending so as to surround cabin 6 are provided at three locations of a front portion, a center portion and a rear portion, as compared with the conventional structure wherein a load from a lateral direction has been received by a cross frame at a center portion and an A pillar at a front side or a B pillar at a rear side, a larger load from a lateral direction can be received, and a sufficiently high performance resistant against a lateral collision can be exhibited. Further, since the structure body is formed as a structure wherein panel components of floor 2, side panels 3 and roof 4 are provided to the frame structure formed by frames 5a, 5b and 5c provided at the three locations, while it is a simple structure, extremely high strength and stiffness can be exhibited as the whole of the vehicle structure body 1. Furthermore, it becomes possible to dispose the attachment parts for a hinge or a lock of a door, where a load concentration is liable to occur, on vertical frame parts 5a1, 5b1 and 5c1 of the respective frames 5a, 5b and 5c, it becomes unnecessary to dispose a part for attaching a hinge or a lock of a door in a side panel, and therefore, making the respective frames 5a, 5b and 5c from an FRP is facilitated as well as making the panel components such as side panels 3 is also facilitated. As a result, at least a main structural portion of vehicle structure body 1, desirably, the whole thereof, can be easily made from an FRP, and a great weight reduction of the vehicle structure body 1 can be achieved while desirable strength and stiffness of the whole of the vehicle structure body 1 can be ensured.

In the above-described vehicle structure body 1, it is possible to form lateral frame parts 5a3, 5b3 and 5c3, extending the vehicle width direction W-W at the upper parts of the respective frames 5a, 5b and 5c, from a material having a specific gravity lower than those of the other frame parts. For example, for the lateral frame parts 5a3, 5b3 and 5c3, the specific gravities thereof can be made lower by setting their areal weights of reinforcing fibers lower than those of the other frame parts. In such a structure, it becomes possible to make the weight of the upper-side part of the vehicle structure body 1 relatively lower than that of the lower-side part, and it becomes possible to satisfy the requirement for setting a center of gravity of a vehicle body lower.

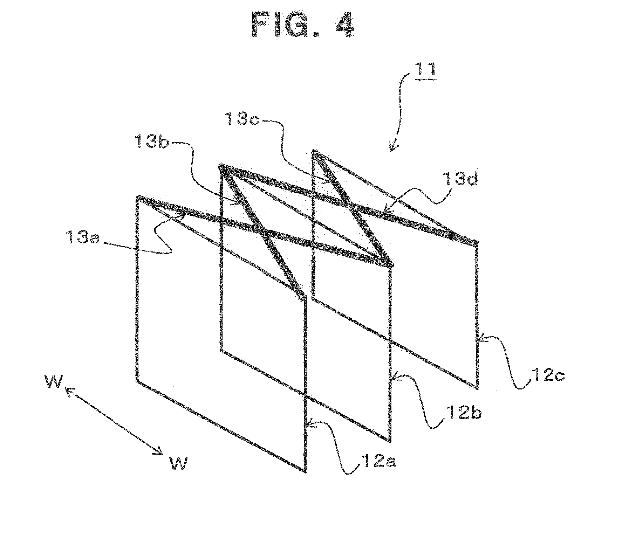

Fig. 4 shows a frame structure part 11 of a vehicle structure body according to another embodiment of the present invention. In the frame structure part 11, similarly to in the embodiment shown in Fig. 1, frames 12a, 12b and 12c extending so as to form loops are provided at three locations of a front portion, a center portion and a rear portion of the structure 11, and further, in this embodiment, a left upper end in a vehicle width direction (direction W-W) of frame 12b provided at the center portion is connected to right upper ends in the vehicle width direction of frames 12a and 12c provided at the front portion and the rear portion, and a right upper end in the vehicle width direction of the frame 12b provided at the center portion is connected to left upper ends in the vehicle width direction of frames 12a and 12c provided at the front portion and the rear portion, through reinforcement means 13a, 13b, 13c and 13d each exhibiting a strength in a tensile direction, respectively. These reinforcement means 13a, 13b, 13c and 13d may exhibit a predetermined strength in a tensile direction, and may be formed as wire-like, belt-like or string-like means. Further, these reinforcement means 13a, 13b, 13c and 13d can also be formed from a fiber reinforced resin, in particular, from a carbon fiber reinforced resin, and in such a case, it is preferred that reinforcing fibers extending in the extension directions of the reinforcement means 13a, 13b, 13c and 13d are contained. Further, if these reinforcement means 13a, 13b, 13c and 13d are formed from a material having a specific gravity lower than those of the other components. similarly to in the aforementioned lateral frame parts 5a3, 5b3 and 5c3, it becomes possible to realize reinforcement due to the reinforcement means while satisfying the requirement for setting a center of gravity of a vehicle body lower.

In the structure thus adding reinforcement means 13a, 13b, 13c and 13d, in particular when a load from a lateral direction is applied to frame 12b provided at the center portion, the load can be received by the frame 12b itself provided at the center portion and at the same time can be received by the frames 12a and 12c provided at the front portion and the rear portion to which forces are transmitted through the reinforcement means 13a, 13b, 13c and 13d connected as described above, and a lager load due to a lateral collision can be received. Further, since a structure can be formed wherein the respective frames 12 a, 12b and 12c are connected by the reinforcement means 13a, 13b, 13c and 13d, the strength and stiffness as the whole of the frame structure part 11 are also enhanced against an external load, and therefore, it becomes possible to realize a structure which is less deformed against an external load and which can remove a possibility of breakage.

### Industrial Applicability

The vehicle structure body according to the present invention can be applied to substantially any vehicle, and in particular, it is suitable for a vehicle strongly requiring weight reduction.

### Explanation of symbols

1: vehicle structure body
2: floor
3: side panel
4: roof
5a, 5b, 5c: frame
5a1, 5b1, 5c1: vertical frame part
5a2, 5b2, 5c2: lateral frame par at lower side
5a3, 5b3, 5c3: lateral frame par at upper side
6: cabin
11: frame structure part
12a, 12b, 12c: frame
13a, 13b, 13c, 13d: reinforcement means

## Claims

1. A vehicle structure body forming at least a cabin outline of a vehicle and including a floor, side panels, and a roof, **characterized in that** frames extending in a direction at a crossing angle with respect to a front-rear direction of said vehicle so as to form loops are provided at three locations of said structure body at a front portion, a rear portion, and a center portion between said front portion and said rear portion, respectively.

2. The vehicle structure body according to claim 1, wherein a vertical frame part extending in a vertical direction in each frame forms an attachment base means for a hinge or a lock of a side door.

3. The vehicle structure body according to claim 1 or 2, wherein a vertical frame part extending in a vertical direction in each frame forms a reinforcement means for said side panels.

4. The vehicle structure body according to any of claims 1 to 3, wherein a lateral frame part extending in a vehicle width direction at a lower part of each frame forms a reinforcement means for said floor.

5. The vehicle structure body according to any of claims 1 to 4, wherein a lateral frame part extending in a vehicle width direction at an upper part of each frame forms a reinforcement means for said roof.

6. The vehicle structure body according to any of claims 1 to 5, wherein a left upper end in a vehicle width direction of a frame provided at said center portion is connected to a right upper end in a vehicle width direction of a frame provided at said front portion or said rear portion, or at each of said front portion and said rear portion, and a right upper end in a vehicle width direction of said frame provided at said center portion is connected to a left upper end in a vehicle width direction of a frame provided at said front portion or said rear portion, or at each of said front portion and said rear portion, through a reinforcement means exhibiting a strength in a tensile direction, respectively.

7. The vehicle structure body according to any of claims I to 6, wherein at least one of frames provided at said front portion, rear portion and center portion is formed from a fiber reinforced resin.

8. The vehicle structure body according to any of claim 7, wherein carbon fibers are included as reinforcing fibers of said fiber reinforced resin.

9. The vehicle structure body according to any of claims 1 to 8, wherein at least one of frames provided at said front portion, rear portion and center portion is formed from a metal.

10. The vehicle structure body according to any of claims 1 to 9, wherein at least one of said floor, side panels and roof is formed from a fiber reinforced resin.

11. The vehicle structure body according to any of claims 5 to 10, wherein a lateral frame part extending in a vehicle width direction at an upper part of each frame is formed from a material having a specific gravity lower than those of the other frame parts.

12. The vehicle structure body according to any of claims 6 to 11, wherein said reinforcement means is formed from a material having a specific gravity lower than those of the other components.
